# EUROPEAN PATENT APPLICATION

(11) **EP 0 994 595 A2**
(43) Date of publication of application: **19.04.2000**
(21) Application number: 99402500.5
(22) Date of filing: 12.10.1999
(51) Int. Cl.: H04J 14/02

(54) **Wavelength multiplexer/demultiplexer and optical transmission apparatus**

(30) Priority: 14.10.1998 JP 29255298
(71) Applicant: NEC CORPORATION, Tokyo (JP)
(72) Inventor: Shimomura, Hirofumi, Tokyo (JP); Henmi, Naoya, Tokyo (JP)
(74) Representative: Poulin, Gérard

(57) **Abstract**

An optical multiplexer/ demultiplexer, according to the present invention, demultiplexes a first optical signal input from a first input/output port, which is connected to an optical transmission line (110), thus outputting it to a second and a third input/output port, which are connected to respective optical transmission lines (120) and (111). It also multiplexes optical signal input from the second and the third input/output port. thus outputting it from the first input/output port. The optical multiplexer/ demultiplexer comprises an optical filter (151), which passes through a predetermined wavelength of light of the optical signals. and reflects the other wavelengths of lights. A fiber Bragg grating, a Fabry-Perot optical filter, etc. can be used as the optical filter. An optical circulator can be adopted for separating input and output of the optical multiplexer/ demultiplexer. The optical multiplexer/ demultiplexer can be used for supplying optical amplifiers having different amplification wavelength regions with wavelength signals included in input WDM signal.

## Description

### BACKGROUND OF THE INVENTION

### Field of the Invention

The present invention relates to a wavelength multiplexer/ demultiplexer and optical transmission apparatus, which are used in an optical communication system. In particular, a wavelength multiplexer/ demultiplexer and optical transmission apparatus, which is used in a WDM (wavelength-division multiplexed) optical communication system, and which is applicable to a future system where the wavelength bands are expanded.

### Description of Related Art

In the optical transmission system, it is unnecessary to perform a process of converting an optical signal into an electric signal by a relay station and then converting it back into an optical signal, when using an optical amplifier as a repeater. This allows the scale of the relay station to be downsized, and the communication cost to be lowered. Recently, the gain and output of an optical fiber amplifier, which is mostly represented by an erbium-doped optical fiber (EDFA), in particular, have rapidly been increasing. This allows the optical fiber to transmit a long distance. At the present time, it has been taken into considerable consideration for further increasing the transmission capacity and managing the transmission status.

However, there are the following problems with the conventional optical fiber transmissions.

An enlargement of the wavelength bands used for transmission allows an increase in the transmission capacity of the optical fabric. A standard wavelength band as currently used for the optical transmission through a main line, has 1550 nm as a center and ranges within the vicinity of it. Even though this wavelength band is limited to the allowable wavelength of a repeater amplifier, the recent rapid progress in the optical amplifier allows an optically relaying transmission using the wavelength band. which has 1580 nm as a center and ranges within the vicinity of it. However, the present technique cannot simultaneously amplify the lights of the entire wavelength band, which flow through an optical transmission line. Therefore, it is necessary to demultiplex the wavelength band of lights that flow through the optical transmission line, and also to place optical amplifiers for the respective wavelength bands. However, in the case where the transmission capacity is increased with the above arrangement, it is necessary to temporarily halt providing the conventional services. It is, however, very difficult to halt this operation because it may have a bad influence on the users.

Because of this, it is necessary to place an optical multiplexer/ demultiplexer beforehand, in anticipation of a future to-be-used wavelength band, so that the wavelength band can be expanded without halting any operations. It is, however, impossible for the conventional optical multiplexer/ demultiplexer, such as the arrayed waveguide grating and WDNI coupler, to adjust to-be-multiplexed/demultiplexer wavelengths of light. As a result, when the optical multiplexer/ demultiplexer is placed, wavelengths of light, which can be multiplexed and demultiplexed, are determined. At this time, it is difficult to foresee which wavelength band will be selected as an optimum one for optical transmission, because it is dependent upon how the technologies relevant to the optical fiber and optical amplifier will progress. Therefore, it is preferable that the multiplexer/ demultiplexer can deal with wavelengths that will be used in the future.

Furthermore, if a new wavelength band is used in the future, the optical node, such as the optical demultiplexing/inserting circuit or optical cross-connector, is also affected. The optical node is made up of optical devices such as an optical multiplexer/ demultiplexer. an optical amplifier, and a transmitting light source, which are greatly dependent upon wavelengths. Consequently, an expansion of the wavelength band requires an additional optical node as well as an optical amplifier.

### SUMMARY OF THE INVENTION

Accordingly, the objective of the present invention is to provide an optical multiplexer/ demultiplexer and optical transmission apparatus, which allow an addition of a desired wavelength band without halting the operation of the conventional optical transmission services.

According to an aspect of the present invention, an optical multiplexer/ demultiplexer demultiplexes an optical signal input from a first input/output port and then outputs it to a second and a third input/output port, and multiplexes optical signals input from the second and the third input/output port, and then outputs its resulting signal from the first input/output port. This optical multiplexer/ demultiplexer is comprised of an optical filter, which passes through a predetermined wavelength of light of the optical signals and reflects the other wavelengths of light.

According to an aspect of the present invention, an optical transmission apparatus processes a predetermined wavelength of light of WDM optical signals input from a first input terminal and then outputs it from a first output terminal; and outputs a light of the WDM optical signals from a second output terminal, where this light does not belong to the wavelength band; and outputs the light not belonging to the wavelength band, from the first output terminal. This optical transmission apparatus is comprised of: a first optical multiplexer/ demultiplexer, where its first input/output port is connected to the first input terminal, whereas its third input/output port is connected to the second output terminal: a functional optical unit, which processes a light output from a second input/output port of the first optical multiplexer/ demultiplexer and then outputs it: and a second optical multiplexer/ demultiplexer, where its second input/output port is connected to an output terminal of the functional optical unit. its third input/output port is connected to the second input terminal, and its first input/output port is connected to the first output terminal.

### BRIEF DESCRIPTION OF DRAWINGS

The above and other objects, features and advantages of the present invention will become more apparent from the following detailed description, when taken in conjunction with the accompanying drawings, wherein:
Fig. 1 illustrates an example of how a relaying amplifier dealing with a plurality of independent wavelengths is installed;
Fig. 2 illustrates an example of the configuration of an optical ADM node;
Fig. 3 illustrates the configuration of an optical demultiplexer, according to a first embodiment of the present invention;
Fig. 4 illustrates the configuration of an optical multiplexer, according to a second embodiment of the present invention;
Fig. 5 illustrates the configuration of an optical demultiplexer, according to a third embodiment of the present invention;
Fig. 6 illustrates the configuration of an optical multiplexer, according to a fourth embodiment of the present invention;
Fig. 7 illustrates the configuration of an optical demultiplexer, according to a fifth embodiment of the present invention;
Fig. 8 illustrates the configuration of an optical demultiplexer, according to a sixth embodiment of the present invention;
Fig. 9 illustrates the configuration of an optical signal relaying/amplifying apparatus; according to a seventh embodiment of the present invention;
Fig. 10 illustrates the configuration of an optical signal relaying/amplifying apparatus; according to a seventh embodiment of the present invention;
Fig. 11 illustrates the configuration of an optical signal relaying/amplifying apparatus; according to a seventh embodiment of the present invention;
Fig. 12 illustrates the configuration of an optical signal relaying/amplifying apparatus, according to an eighth embodiment of the present invention;
Fig. 13 illustrates the configuration of an optical signal relaying/amplifying apparatus, according to an eighth embodiment of the present invention;
Fig. 14 illustrates the configuration of an optical signal relaying/amplifying apparatus, according to an eighth embodiment of the present invention;
Fig. 15 illustrates the configuration of an optical signal relaying/amplifying apparatus, according to a ninth embodiment of the present invention;
Fig. 16 illustrates the configuration of an optical signal relaying/amplifying apparatus, according to a ninth embodiment of the present invention;
Fig. 17 illustrates the configuration of an optical signal relaying/amplifying apparatus, according to a ninth embodiment of the present invention;
Fig. 18 illustrates the configuration of an optical signal relaying/amplifying apparatus, according to a tenth embodiment of the present invention;
Fig. 19 illustrates the configuration of an optical signal relaying/amplifying apparatus, according to a tenth embodiment of the present invention;
Fig. 20 illustrates the configuration of an optical signal relaying/amplifying apparatus, according to a tenth embodiment of the present invention;
Fig. 21 illustrates the configuration of an optical network apparatus, according to an eleventh embodiment of the present invention;
Fig. 22 illustrates the configuration of an optical network apparatus, according to an eleventh embodiment of the present invention;
Fig. 23 illustrates the configuration of an optical network apparatus, according to an eleventh embodiment of the present invention; and
Fig. 24 illustrates the configuration of an optical network apparatus, according to an eleventh embodiment of the present invention.

### DETAILED DESCRIPTION OF THE PREFERRED EMBODIMENTS

First, in order to facilitate an understanding of the present invention, the conventional optical transmission system will be explained below, before an optical multiplexer/ demultiplexer and optical transmission apparatus, according to the present invention, is explained.

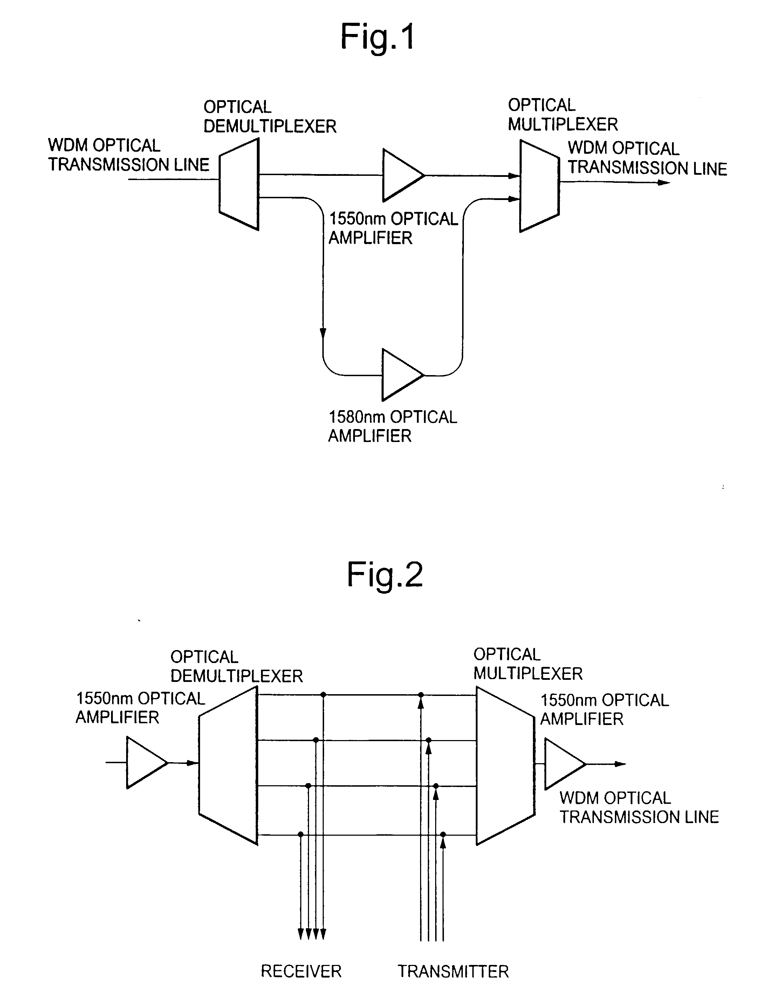

In an optical transmission system, when a transmission is started using a new transmitting wavelength band, it is necessary for an optical multiplexer/ demultiplexer to separate a new wavelength band of optical signals from the conventional wavelength band of optical signals, as shown in Fig. 1. An additional optical amplifier dealing with the new wavelength band is also necessary. In order to place an additional optical amplifier without halting the conventional services, it is necessary to place an optical multiplexer/ demultiplexer beforehand, in anticipation of a future to-be-used wavelength band. However, the conventional optical multiplexer/ demultiplexer, such as the arrayed waveguide grating or WDM coupler, cannot adjust wavelengths of light, which are to be multiplexed and demultiplexed. Because of this, when the optical multiplexer/ demultiplexer is placed, wavelengths of light, which can be multiplexed and demultiplexed, are determined. At this time, it is difficult to foresee which wavelength band will be selected as an optimum one for optical transmission, because it is dependent upon how the technologies relevant to the optical fiber and optical amplifier will progress in the future. Therefore, it is preferable that the multiplexer/ demultiplexer can deal with wavelengths that will be used in a future.

Furthermore, if a new wavelength band is used in the future, the optical node, such as the optical demultiplexing/inserting circuit or optical cross-connector, is also affected. As shown in Fig. 2. the optical node is made up of optical devices such as an optical multiplexer/ demultiplexer, an optical amplifier, and a transmitting light source, which are greatly dependent upon wavelengths. Consequently, an expansion of the wavelength band requires placing an additional optical node as with the optical amplifier.

Hereafter, each embodiment of the present invention will be described in reference to the figures.

### (First embodiment)

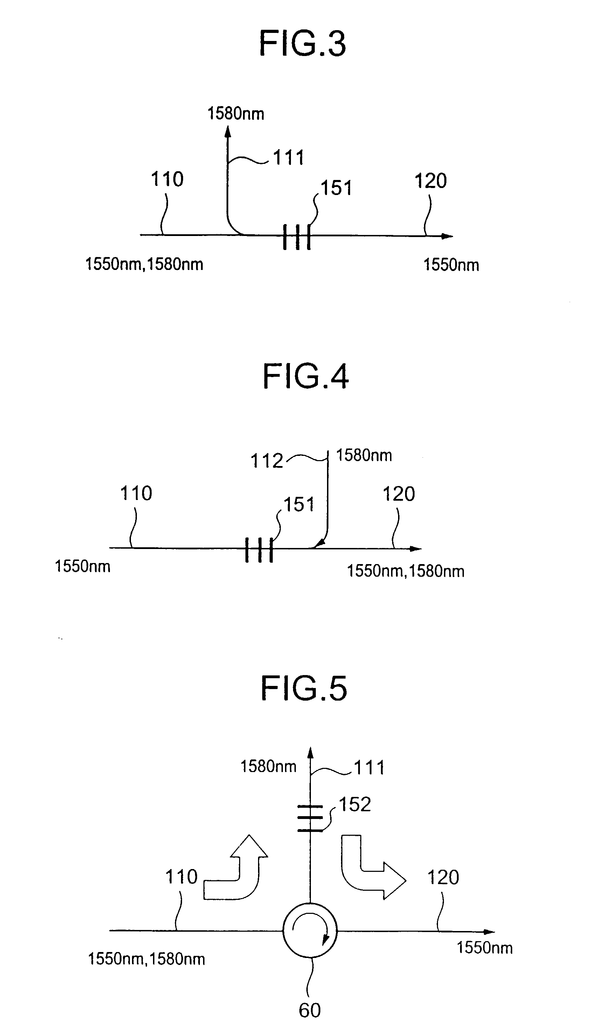

Fig. 3 illustrates the configuration of an optical demultiplexer, according to the first embodiment of the present invention. The optical demultiplexer of Fig. 3 includes a fiber Bragg grating 151.

Two lights with their respective wavelengths of 1550 nm and 1580 nm, which are wavelength-division-multiplexed, are transmitted through an optical transmission line 110. A fiber Bragg grating 151, connected to the optical transmission line 110, has a property passing through only a light 1550 nm in wavelength. Conversely, the other wavelengths of light are reflected. Accordingly, the light 1550 nm in wavelength is output to an optical transmission line 120, whereas the light 1580 nm in wavelength is output to an optical transmission line 111. In this manner as described above, the wavelength-division-multiplexed lights can be demultiplexed into the respective wavelengths of 1550 nm and 1580 nm. It is noted that the fiber Bragg grating 151 has a property reflecting all lights except for the light 1550 nm in wavelength. Therefore, any light, wavelength-division-multiplexed with the light 1550 nm in wavelength, including the light 1580 nm in wavelength, can be demultiplexed in the same way.

### (Second embodiment)

Fig. 4 illustrates the configuration of an optical multiplexer, according to the second embodiment of the present invention. The optical multiplexer of Fig. 4 includes a fiber Bragg grating 151.

A light 1550 nm in wavelength is transmitted to an optical transmission line 110 of Fig. 4, whereas a light 1580 nm in wavelength is transmitted to an optical transmission line 112. A fiber Bragg grating 151. connected to the optical transmission line 110, has a property passing through only a light 1550 nm in wavelength. Conversely, the other wavelengths of light are reflected. Therefore, the lights 1550 nm and 1580 nm in wavelength, which are multiplexed, are transmitted through an optical transmission line 120. Even in this embodiment, as in the first embodiment, the wavelength of light which is multiplexed with the light 1550 nm in wavelength, is not limited to 1580 nm, but it can be any other wavelength.

An optical filter, which passes through one band of light and reflects the other bands of light, can be used in place of the fiber Bragg grating, as in the first and the second embodiments. A Fabry-Perot optical filter, etc. can be used as the optical filter.

### (Third embodiment)

Fig. 5 illustrates the configuration of an optical demultiplexer, according to the third embodiment of the present invention. The optical demultiplexer of Fig. 5 is comprised of a fiber Bragg grating 152 and an optical circulator 60.

Two lights with their respective wavelengths of 1550 nm and 1580 nm, which are wavelength-division-multiplexed, are transmitted through an optical transmission line 110. The optical circulator 60, connected to the optical transmission line 110, outputs the wavelength-division-multiplexed light to an optical transmission line 111. A fiber Bragg grating 152, connected to the optical transmission line 111, has a property reflecting only a light 1550 nm in wavelength. Conversely, the other wavelengths of light are passed through. Accordingly, the light 1550 nm in wavelength is output to an optical transmission line 120, whereas the light 1580 nm in wavelength is output to an optical transmission line 111. In this manner as described above, the wavelength-division-multiplexed lights can be demultiplexed. Even in this embodiment, along with the light 1550 nm in wavelength, any wavelength of light can be dealt with in place of the light 1580 nm in wavelength.

### (Fourth embodiment)

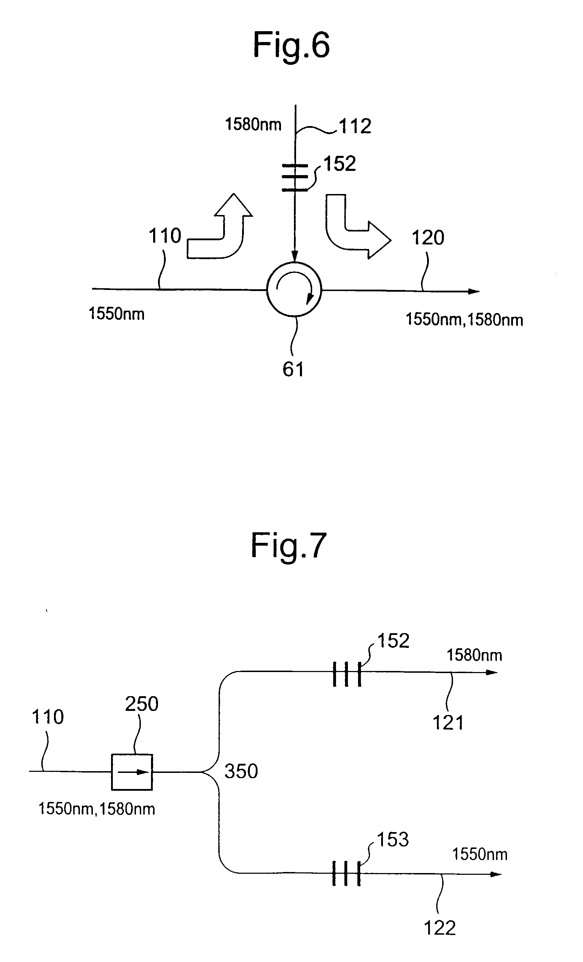

Fig. G illustrates the configuration of an optical multiplexer, according to the fourth embodiment of the present invention. The optical multiplexer of Fig. 6 is comprised of a fiber Bragg grating 152 and an optical circulator 61.

A light 1550 nm in wavelength is transmitted to an optical transmission line 110 in Fig. 6, whereas a light 1580 nm in wavelength is transmitted to an optical transmission line 112. An optical circulator 61 connected to the optical transmission line 110, outputs the light 1550 nm in wavelength to the optical transmission line 112. A fiber Bragg grating 152, connected to the optical transmission line 112, has a property, reflecting only a light 1550 nm in wavelength. Conversely, the other wavelengths of light are passed through. Therefore, the lights 1550 nm and 1580 nm in wavelength, which are multiplexed, are transmitted to an optical transmission line 120. Even in this embodiment, along with the light 1550 nm in wavelength, any wavelength of light can be dealt with in place of the light 1580 nm in wavelength.

In the first to the fourth embodiment, the case where there are two wavelength bands of 1550 nm and 1580 nm is described. However, the present invention is not limited to the wavelength of 1580 nm, and any other wavelength band can also be used. Therefore, the light 1550 nm in wavelength can be multiplexed with any other wavelength band of light using the above optical multiplexer/ demultiplexer. This allows the system to further deal with a future expansion of the wavelength band.

### (Fifth embodiment)

Fig. 7 illustrates the configuration of an optical demultiplexer, according to the fifth embodiment of the present invention. The optical demultiplexer of Fig. 7 is comprised of an optical isolator 250. an optical power divider 350, and fiber Bragg gratings 152 and 153. Two lights with their respective wavelengths of 1550 nm and 1580 nm, which are wavelength-division-multiplexed, are transmitted through an optical transmission line 110 in Fig 7. They enter an optical isolator 250, connected to the optical transmission line 110. and then enter an optical power divider 350, where they are demultiplexed. A fiber Bragg grating 153 has a property passing through only a light 1550 nm in wavelength. Conversely, the other wavelengths of light are reflected. Accordingly, the light 1550 nm in wavelength is output to an optical transmission line 122. On the other hand, the fiber Bragg grating 152 has a property passing through only a light 1580 nm in wavelength. Conversely, the other wavelengths of light are reflected. As a result, the light 1580 nm in wavelength is output to an optical transmission line 121. In this manner as described above, the wavelength-division-multiplexed lights can be demultiplexed.

### (Sixth embodiment)

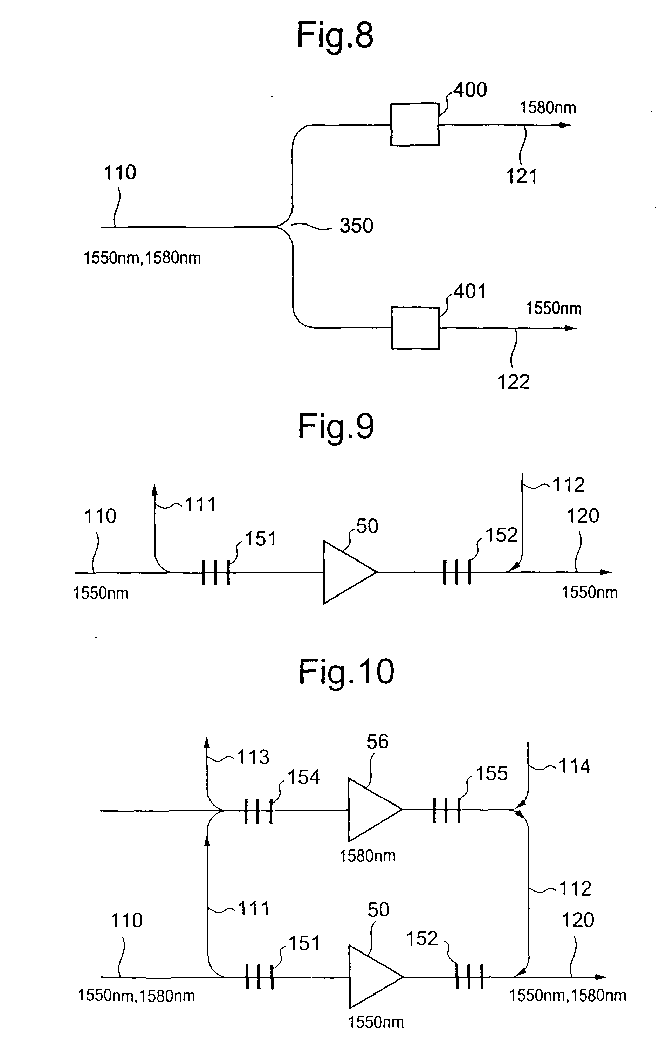

Fig. 8 illustrates the configuration of an optical demultiplexer, according to the sixth embodiment of the present invention. The optical demultiplexer of Fig. 8 is comprised of optical filters 400 and 401, and an optical power divider 350. Two lights with their respective wavelengths of 1550 nm and 1580 nm, which are wavelength-division-multiplexed, are transmitted through an optical transmission line 110 in Fig. 8. Then, an optical power divider 350, connected to the optical transmission line 110, splits them. An optical filter 400 has a property passing through only a light 1580 nm in wavelength. Conversely, the other wavelengths of light are absorbed. Accordingly, the light 1580 nm in wavelength is output to an optical transmission line 121. On the other hand, an optical filter 401 has a property passing through only a light 1550 nm in wavelength. Conversely, the other wavelengths of light are reflected. As a result, the light 1550 nm in wavelength is output to an optical transmission line 122. In this manner as described above, the wavelength-division-multiplexed lights can be demultiplexed. It is noted that a band-pass filter such as a multi-layered dielectric optical filter, Fabry-Perot optical filter, etc. can be used for the optical filters 400 and 401.

In the embodiments described above, only the lights 1550 nm and 1580 nm in wavelength are used. However, the present invention is not limited to these two wavelengths of light. Regarding an expansion of the wavelength band. for example, the wavelength bands in vicinity of the wavelengths 1550 nm and 1580 nm can also be dealt with by properly setting a passing band widths of the fiber Bragg grating and wavelength filter. Furthermore, the present invention is not limited to the wavelength bands of 1550 nm and 1580 nm. A combination with, for example, a wavelength band of 1300 nm can also be provided.

The transmission band for the current optical communication through a main line is within the vicinity of 1550 nm. However, placing the above optical multiplexer/ demultiplexer somewhere along the transmission line beforehand, allows an upgrading of the transmission services using the conventional wavelength band of 1550 nm, without halting these services, when there are demands for transmitting using another wavelength band in the future.

In the fifth and the sixth embodiment, only the optical demultiplexer has been described. However, an optical multiplexer can also be structured using the identical idea. Furthermore, any combination of the optical demultiplexer and optical multiplexer as described in the first to the sixth embodiment can be used. This combination should be suitably changed according to the situation.

Furthermore, in the above embodiments, the arrangement with the fiber Bragg grating and optical filter has been described. However, any alternative, which identically functions, can be substituted for them.

### (Seventh embodiment)

Fig. 9 illustrates the configuration of a relaying optical amplifier, according to the seventh embodiment of the present invention. The relaying optical amplifier of Fig. 9 is comprised of an optical amplifier 50 and fiber Bragg gratings 151 and 152.

A light 1550 nm in wavelength is transmitted to an optical transmission line 110 in Fig. 9. The transmitted light is then amplified by the optical amplifier 50, and output to an optical transmission line 120. The fiber Bragg gratings 151 and 152 have a property passing through only a light 1550 nm in wavelength. Conversely, the other wavelengths of light are reflected. Therefore, it is possible to assign other wavelength bands to respective optical transmission lines 111 and 112.

According to the configuration as shown in Fig. 10, an optical amplifier 56 using a wavelength band of 1580 nm as well as the conventional wavelength band of 1550 nm is placed, so that its transmission capacity can be increased. This arrangement allows an expansion of the wavelength band. Lights 1550 nm and 1580 nm in wavelength are demultiplexed, amplified by the respective optical amplifiers corresponding to these wavelength bands, and then multiplexed and output to the optical transmission line 120. A fiber Bragg grating 154, connected to the optical transmission line 110, has a property passing through only a light 1580 nm in wavelength. Conversely, the other wavelengths of light are reflected. Therefore, another wavelength band of light can be assigned to each of the optical transmission lines 113 and 114.

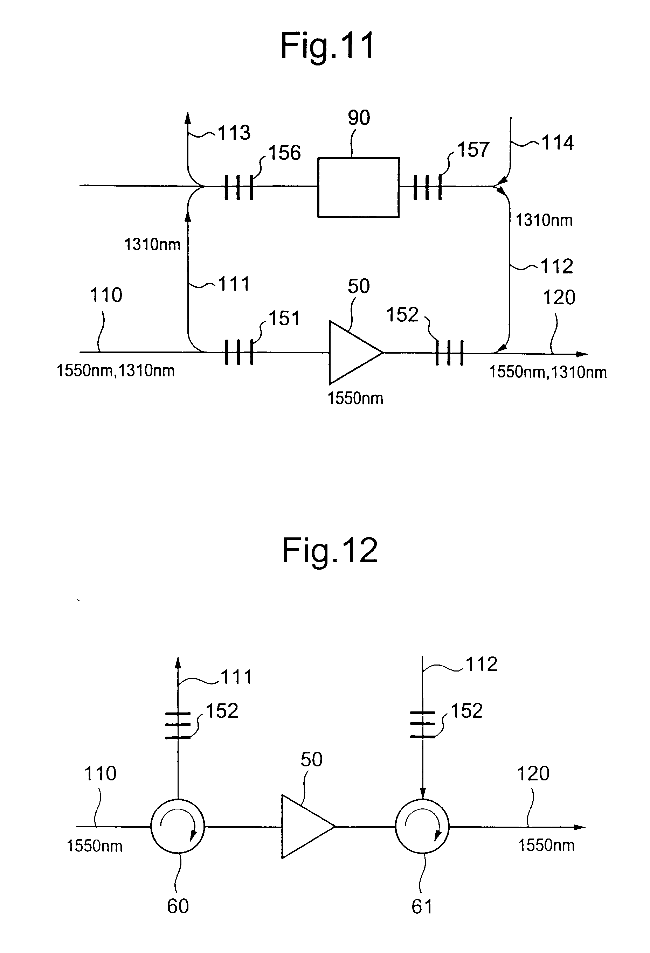

Fig. 11 illustrates the configuration where a managing/controlling optical signal processing apparatus 90 using another wavelength band, which is an optical node, is placed in addition to the conventional arrangement for an optical transmission, so as to extend its function. The lights 1550 nm and 1310 nm in wavelength, which flow through the optical transmission line, are demultiplexed. An optical amplifier 50 then amplifies the light 1550 nm in wavelength. On the other hand, the light 1310 nm in wavelength is information-processed by the managing/controlling optical signal processing apparatus 90, and then multiplexed and output to an optical transmission line 120. A fiber Bragg grating 156, connected to an optical line 111, has a property passing through only a light 1310 nm in wavelength. Conversely, the other wavelengths of lights are reflected. Therefore, another wavelength band of light can be assigned to each of the optical transmission lines 113 and 114.

### (Eighth embodiment)

Fig. 12 illustrates the configuration of a relaying optical amplifier, according to the eighth embodiment of the present invention. The relaying optical amplifier of Fig. 12 is comprised of an optical amplifier 50. optical circulators 60 and 61, and fiber Bragg gratings 152.

A light 1550 nm in wavelength is transmitted to an optical transmission line 110 in Fig. 12. Afterwards, the transmitted light enters the optical circulator 60. and is then output to the optical transmission line 111. A fiber Bragg grating 152, connected to the optical transmission line 111, has a property reflecting only a light 1550 nm in wavelength. Conversely, the other wavelengths of light are passed through. Therefore, the light 1550 nm in wavelength enters the optical amplifier 50. After it is amplified, the amplified light enters the optical circulator 61, and is then output to an optical transmission line 112. The fiber Bragg grating 152 has a property reflecting only a light 1550 nm in wavelength. Conversely, the other wavelengths of light are passed through. As a result, the light 1550 nm in wavelength is output to the optical transmission line 120. Therefore, another wavelength band of light can be assigned to each of the optical transmission lines 111 and 112.

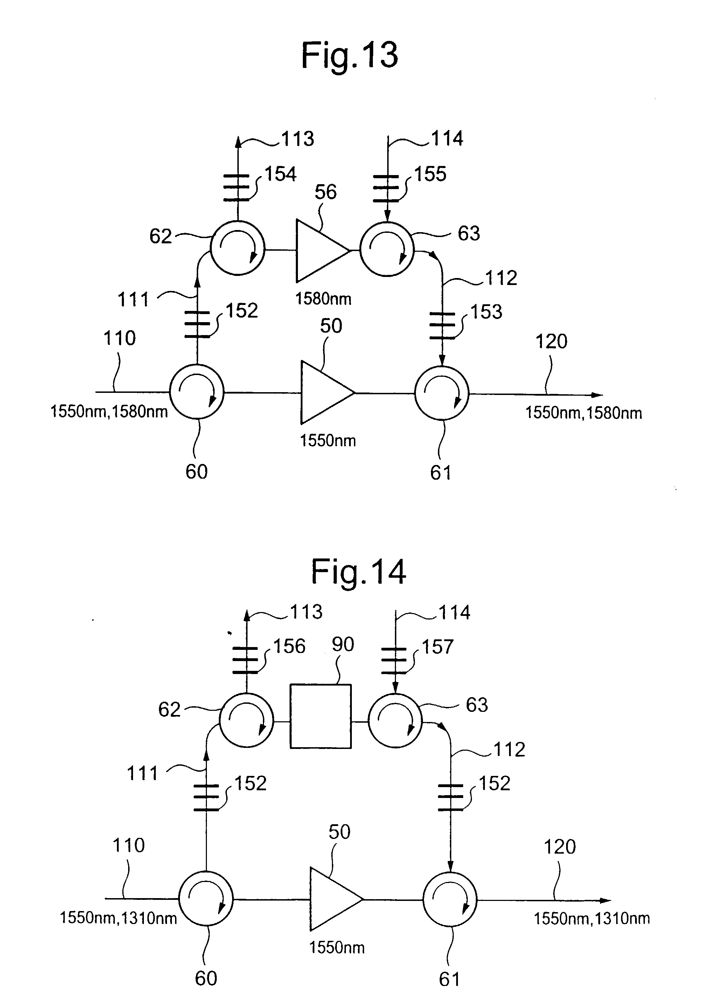

Fig. 13 illustrates the configuration where an optical amplifier 56 for a wavelength band of 1580 nm is placed in addition to the conventional arrangement for the wavelength band of 1550 nm, so as to increase the transmission capacity. This arrangement allows an expansion of the wavelength band. Lights 1550 nm and 1580 nm in wavelength, which are transmitted through the optical transmission line. are demultiplexed, amplified by the respective optical amplifiers corresponding to these wavelength bands, and then multiplexed and output to the optical transmission line 120. A fiber Bragg grating 154, connected to the optical transmission line 113, has a property reflecting only a light 1580 nm in wavelength. Conversely, the other wavelengths of light are passed through. Therefore, another wavelength band of light can be assigned to each of the optical transmission lines 113 and 114.

Fig. 14 illustrates the configuration where a managing/controlling optical signal processing apparatus 90 for another wavelength band is placed in addition to the conventional arrangement for an optical transmission, so as to expand its function. The managing/controlling optical signal processing apparatus 90 monitors management information which is sent using the wavelength band of 1310 nm, and updates as necessary, thus transmitting it to a downstream node. The lights 1550 nm and 1310 nm in wavelength, which flow through the optical transmission line. are demultiplexed. An optical amplifier 50 then amplifies the light 1550 nm in wavelength. On the other hand. the light 1310 nm in wavelength is information-processed by the managing/controlling optical signal processing apparatus 90, and then multiplexed and output to an optical transmission line 120. A fiber Bragg grating 156, connected to an optical line 113, has a property reflecting only a light 1310 nm in wavelength. Conversely, the other wavelengths of light are passed through. Therefore, another wavelength band of light can be assigned to each of the optical transmission lines 113 and 114.

### (Ninth embodiment)

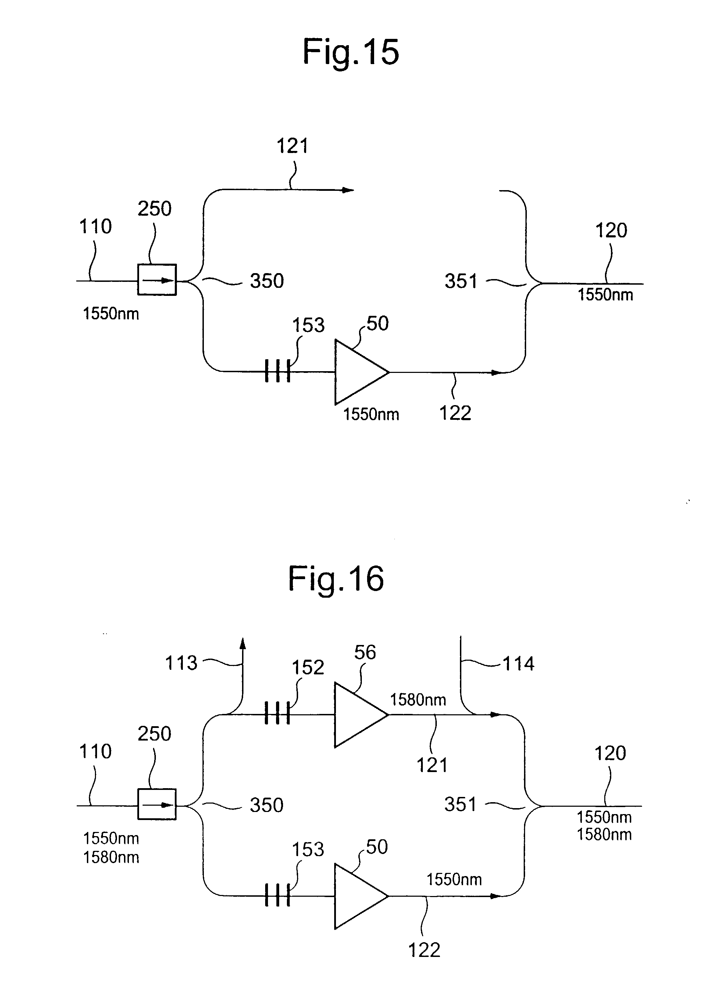

Fig. 15 illustrates the configuration of a relaying optical amplifier, according to the ninth embodiment of the present invention. The relaying optical amplifier of Fig. 15 is comprised of an optical amplifier 50, a fiber Bragg grating 153, an optical isolator 250. and an optical power divider 350.

A light 1550 nm in wavelength is transmitted to an optical transmission line 110 in Fig. 15. Afterwards, the transmitted light enters the optical isolator 250. connected to the optical transmission line 110. and is then split by the optical power divider 350. The fiber Bragg grating 153 has a property passing through only a light 1550 nm in wavelength. Conversely, the other wavelengths of lights are reflected. Therefore, the optical amplifier 50 amplifies the light 1550 nm in wavelength. Thereafter, it enters an optical power divider 351, connected to the optical transmission line 122, and is then output to an optical transmission line 120. Therefore, another wavelength band of light can be assigned to the optical transmission lines 121.

Fig. 16 illustrates the configuration where an optical amplifier 56 for a wavelength band of 1580 nm is placed in addition to the conventional arrangement for the wavelength band of 1550 nm, so as to increase the transmission capacity. This arrangement allows an expansion of the wavelength band. Lights 1550 nm and 1580 nm in wavelength. which are transmitted through the optical transmission line, are demultiplexed, amplified by the respective optical amplifiers corresponding to these wavelength bands, and then multiplexed and output to the optical transmission line 120. Another wavelength band of light can also be assigned by connecting optical transmission lines 113 and 114 to the optical transmission line 121.

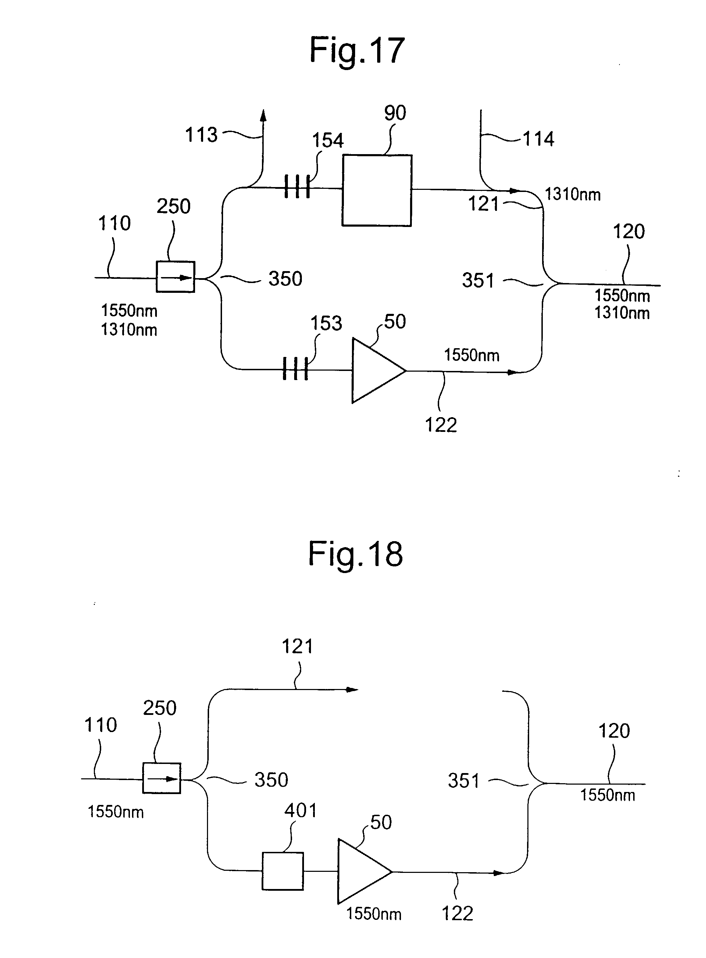

Fig. 17 illustrates the configuration where a managing/controlling optical signal processing apparatus 90 for another wavelength band is placed in addition to the conventional arrangement for an optical transmission, so as to expand its function. The lights 1550 nm and 1310 nm in wavelength, which flow through the optical transmission line, are demultiplexed. An optical amplifier 50 then amplifies the light 1550 nm in wavelength. Afterwards, the light 1310 nm in wavelength is information-processed by the managing/controlling optical signal processing apparatus 90, and then multiplexed and output to an optical transmission line 120. It is noted that another wavelength band of light can also be assigned by connecting optical transmission lines 113 and 114 to the optical transmission line 121.

An optical band-pass filter can be used in place of the fiber Bragg grating as shown in Figs. 15, 16, and 17. A multi-layered dielectric optical filter, a Fabry-Perot optical filter, etc. can be used as the optical filter.

### (Tenth embodiment)

Fig. 18 illustrates the configuration of a relaying optical amplifier, according to the tenth embodiment of the present invention. A light 1550 nm in wavelength is transmitted to an optical transmission line 110. The transmitted light is demultiplexed by an optical power divider 350, which is connected to the optical transmission line 110. A wavelength filter 401 has a property passing through only a light 1550 nm in wavelength. Conversely, the other wavelengths of light are absorbed. Therefore, the light 1550 nm in wavelength enters an optical amplifier 50 and is then amplified. Thereafter, it enters an optical power divider 351, connected to the optical transmission line 122, and is then output to an optical transmission line 120. Therefore, another wavelength band of light can be assigned to the optical transmission line 121.

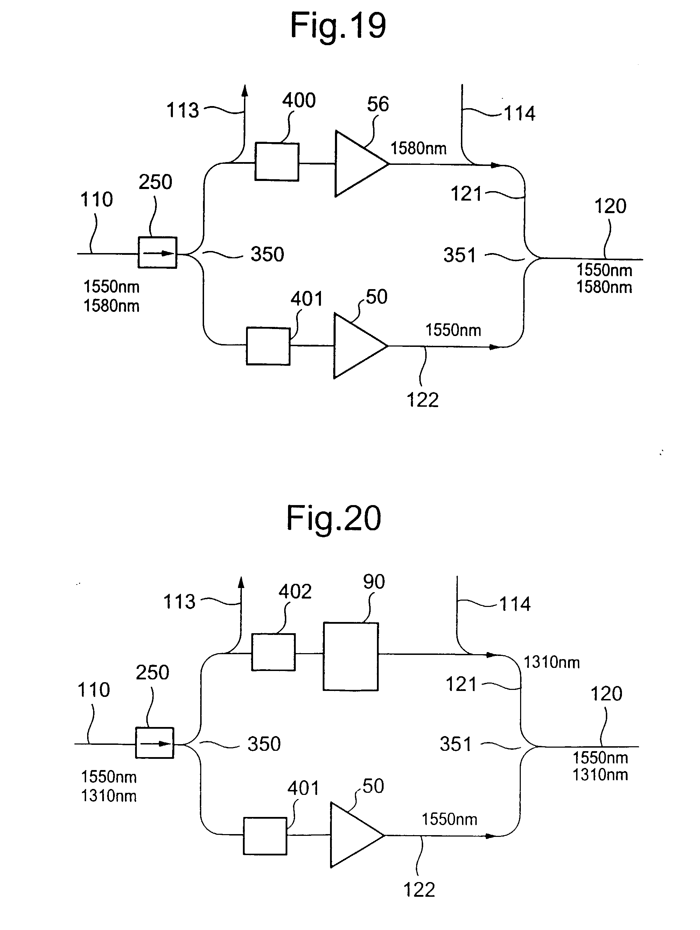

Fig. 19 illustrates the configuration where an optical amplifier 56 for a wavelength band of 1580 nm is placed in addition to the conventional arrangement for the wavelength band of 1550 nm, so as to increase the transmission capacity. This arrangement allows an expansion of the wavelength band. Lights 1550 nm and 1580 nm in wavelength, which are transmitted through the optical transmission line, are demultiplexed, amplified by the respective optical amplifiers corresponding to these wavelength bands, and then multiplexed and output to the optical transmission line 120. Another wavelength band of light can also be assigned by connecting optical transmission lines 113 and 114 to the optical transmission line 121.

Fig. 20 illustrates the configuration where a managing/controlling optical signal processing apparatus 90 for another wavelength band is placed in addition to the conventional arrangement for an optical transmission, so as to expand its function. The lights 1550 nm and 1310 nm in wavelength, which flow through the optical transmission line, are demultiplexed. An optical amplifier 50 then amplifies the light 1550 nm in wavelength. Afterwards, the light 1310 nm in wavelength is information-processed by the managing/controlling optical signal processing apparatus 90. and then multiplexed and output to an optical transmission line 120. It is noted that another wavelength band of light can also be assigned by connecting optical transmission lines 113 and 114 to the optical transmission line 121.

### (Eleventh embodiment)

In the above description, the relaying optical amplifier has been explained. Alternatively, an optical node such as an optical demultiplexer or an optical cross-connector can be used in place of the optical amplifier. The optical node is comprised of optical devices, such as a WDM optical multiplexer/ demultiplexer, an optical amplifier, a wavelength light source, etc., which are dependent upon wavelengths of light. Therefore, when it is necessary to expand the wavelength band, an additional optical node has to be placed in the same manner as the optical amplifier.

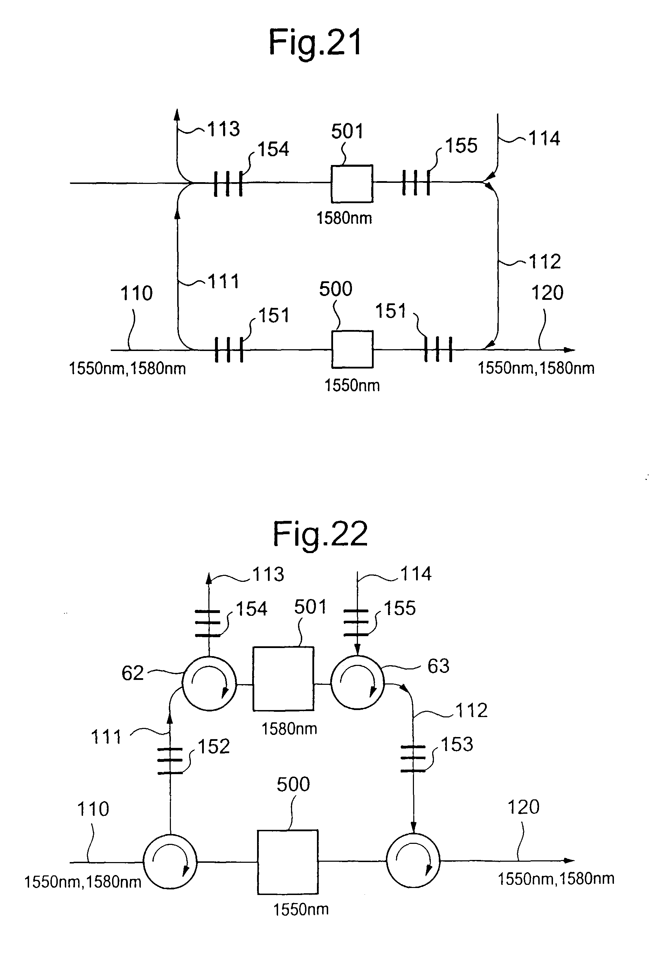

Fig. 21 illustrates the arrangement of an optical network apparatus, according to the present invention. This arrangement is made by using the configuration of the seventh embodiment, namely by adding an optical node corresponding to a new wavelength band of 1580 nm to the conventional optical node corresponding to the wavelength band of 1550 nm.

Fig. 22 illustrates the arrangement of an optical network apparatus, according to the present invention. This arrangement is made by using the configuration of the eighth embodiment, namely by adding an optical node corresponding to a new wavelength band of 1580 nm to the conventional optical node corresponding to the wavelength band of 1550 nm.

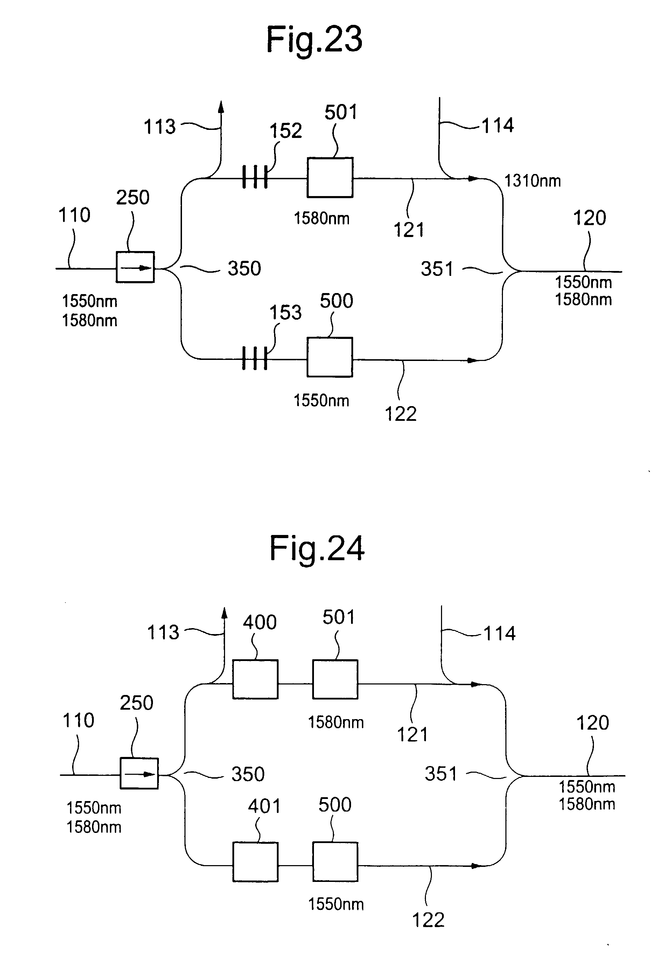

Fig. 23 illustrates the arrangement of an optical network apparatus, according to the present invention. This arrangement is made by using the configuration of the ninth embodiment, namely by adding an optical node corresponding to a new wavelength band of 1580 nm to the conventional optical node corresponding to the wavelength band of 1550 nm.

Fig. 24 illustrates the arrangement of an optical network apparatus, according to the present invention. This arrangement is made by using the configuration of the tenth embodiment, namely by adding an optical node corresponding to a new wavelength band of 1580 nm to the conventional optical node corresponding to the wavelength band of 1550 nm.

It is noted that another wavelength band of light can be assigned to any one of the above arrangements by connecting the optical transmission lines 113 and 114.

The seventh to the eleventh embodiment have the following advantages.

The expansion of the transmission band by placing an optical amplifier for a wavelength band of 1580 nm allows the transmission capacity to nearly double the conventional capacity. This upgrading work can be done only by adding an optical amplifier for a to-be-added wavelength band, to the optical amplifier as shown in Figs. 9, 12, 15, and 18, without halting the conventional services using the wavelength band of 1550 nm.

Moreover, even after the wavelength band of 1580 nm has been upgraded, an expansion to another wavelength band of, for example, 1300 nm can also be done in the same manner, using the optical transmission lines 113 and 114 as described in Figs. 10, 13, 16, and 19. This allows several transmission wavelength bands to be parallel, without halting the current services.

In addition, placing a managing/controlling optical signal processing apparatus 90 can provide expanded services. This placement can be done only by adding the managing/controlling optical signal processing apparatus 90 for a to-be-added wavelength band, to the optical amplifier in Figs. 9, 12, 15, and 18. This can be also done without halting the conventional services using the wavelength band of 1550 nm.

Moreover, the placement of a fiber Bragg grating and wavelength filter causes a limitation in the to-be-passed wavelength band. This allows the removal of unnecessary wavelengths of light such as spontaneous emission light noises from the optical amplifier. Therefore, an optical transmission with a low degradation of reception sensitivity is possible.

As a result, a long-haul transmission can be made without converting the WDM optical signal into its corresponding electric signal.

How to provide the additional services and additional wavelength bands is not limited to what has been described in the above embodiments. This can be used for all wavelengths, which will be prospectively used in the future.

It is noted that according to the present invention, the number of WDM lights, which are transmitted through each optical transmission line, is not limited to one wavelength of light. It can optionally be set to any desired number of lights, such as two, four, eight, sixteen, thirty-two, sixty-four, etc. Moreover, the wavelength band of an input light is not limited to 1550 nm or 1580 nm. It can optionally be set to any desired wavelength band, such as 1300 nm.

Furthermore, according to the present invention, by inserting the optical multiplexer/ demultiplexer as described above, before or after the optical amplifier or the optical node, another wavelength than those handled by these apparatus can be extracted without influencing the conventional services. This allows an increase in the wavelength bands as well as the number of WDM lights for increasing the transmission capacity; a placement of a managing/controlling optical signal processing apparatus using another wavelength; and a placement of an optical node for an increase in the wavelength band. That is, these upgrading procedures can be smoothly performed without halting the conventional services.

Furthermore, since an optical filter, which passes through and outputs only a wavelength of an optical signal, is provided, unnecessary wavelengths of lights such as spontaneous emission lights from the optical amplifier are eliminated. The noises caused by the spontaneous emission lights are also eliminated. Therefore, an optical transmission with a low degradation of reception sensitivity is possible.

While this invention has been described in connection with certain preferred embodiments, it is to be understood that the subject matter encompassed by way of this invention is not to be limited to those specific embodiments, On the contrary, it is intended for the subject matter of the invention to include all alternatives, modifications, and equivalents as can be included within the spirit and scope of the following claims.

## Claims

1. An optical multiplexer/ demultiplexer, comprising:
a first input/output port;
a second input/output port;
a third input/output port; and
an optical filter, which passes through a predetermined wavelength of light and reflects the other wavelengths of lights, and which demultiplexes a first optical signal input from said first input/output port and then outputs it to said second and said third input/output port, and which multiplexes said second and said third optical signal input from said second and said third input/output port, and then outputs it from said first input/output port.

2. The optical multiplexer/ demultiplexer, according to claim 1, wherein said optical filter comprises a fiber Bragg grating.

3. The optical multiplexer/ demultiplexer, according to claim 1. further comprising an optical circulator, where its first to its third input/output port are respectively connected to said input port, the input terminal of said optical filter, and said first output port.

4. An optical multiplexer/ demultiplexer, which demultiplexes a first optical signal input from a first input/output port and outputs it to a second and a third input/output port. and which multiplexes a second and a third optical signal input from said second and said third input/output port and then outputs it from said first input/output port. comprising:
a first optical filter which is inserted between said first input/output port and said second input/output port, and which passes through a first wavelength band of light; and
a second optical filter which is inserted between said first input/output port and said third input/output port, and which passes through a second wavelength band of light.

5. The optical multiplexer/ demultiplexer, according to claim 4, wherein each of said first and said second optical filter comprises a fiber Bragg grating.

6. An optical transmission apparatus, which processes a predetermined wavelength of light of WDM optical signals input from a first input terminal and outputs it; outputs a light of said WDM optical signals from a second output terminal, where this light does not belong to said wavelength band; and outputs said light not belonging to said wavelength band, from said first output terminal, comprising:
a first optical multiplexer/ demultiplexer, where its first input/output port is connected to said first input terminal, whereas its third input/output port is connected to said second output terminal;
a functional optical unit, which processes a light output from a second input/output port of said first optical multiplexer/ demultiplexer and then outputs it; and
a second optical multiplexer/ demultiplexer, where its second input/output port is connected to an output terminal of said functional optical unit, its third input/output port is connected to said second input terminal, and its first input/output port is connected to said first output terminal.

7. The optical transmission apparatus, according to claim 6, wherein each of said first and said second optical multiplexer/ demultiplexer comprises an optical multiplexer/ demultiplexer, which demultiplexes a first optical signal input from a first input/output port and outputs it to a second and a third input/output port; Or multiplexes a second and a third optical signal input from said second and said third input/output port and then outputs it from said first input/output port, where said optical multiplexer/ demultiplexer comprises an optical filter, which passes through a predetermined wavelength of light of said optical signals, and reflects the other lights.

8. The optical transmission apparatus, according to claim 7, wherein said optical filter comprises a fiber Bragg grating.

9. The optical transmission apparatus, according to claim 8, wherein each of the said first and the second optical multiplexer/ demultiplexer further comprises an optical circulator, where its first to its third input/output port are respectively connected to said input port, an input terminal of said fiber Bragg grating, and said first output port.

10. An optical transmission apparatus, comprising:
a first optical circuit, which processes a first wavelength band of light, and
a second optical circuit, which processes a second wavelength band of light,
wherein each of said first and said second optical circuit includes an optical transmission apparatus, according to claim 6, and a second output terminal and second input terminal of said first optical circuit are respectively connected to a first input terminal and first output terminal of said second optical circuit.

11. An optical transmission apparatus, comprising:
a first optical circuit, which processes a first wavelength band of light, and
a second optical circuit, which processes a second wavelength band of light,
wherein each of said first and said second optical circuit includes an optical transmission apparatus, according to claim 7, and a second output terminal and second input terminal of said first optical circuit are respectively connected to a first input terminal and first output terminal of said second optical circuit.

12. An optical transmission apparatus, comprising:
a first optical circuit, which processes a first wavelength band of light, and
a second optical circuit, which processes a second wavelength band of light,
wherein each of said first and said second optical circuit includes an optical transmission apparatus, according to claim 8, and a second output terminal and second input terminal of said first optical circuit are respectively connected to a first input terminal and first output terminal of said second optical circuit.

13. An optical transmission apparatus, comprising:
a first optical circuit, which processes a first wavelength band of light, and
a second optical circuit, which processes a second wavelength band of light,
wherein each of said first and said second optical circuit includes an optical transmission apparatus, according to claim 9, and a second output terminal and second input terminal of said first optical circuit are respectively connected to a first input terminal and first output terminal of said second optical circuit.

14. An optical transmission apparatus, comprising:
an optical demultiplexer, which demultiplexes an input WDM optical signal, and
at least one functional optical unit, which is connected to each output terminal of said optical demultiplexer,
wherein said optical demultiplexer includes an optical multiplexer/ demultiplexer, according to claim 4.

15. The optical transmission apparatus, according to claim 11 wherein each of said first and said second optical filter includes a fiber Bragg grating.

16. The optical transmission apparatus, according to claim 6, wherein said functional optical unit includes an optical amplifier.

17. The optical transmission apparatus, according to claim 10, wherein said functional optical unit includes an optical amplifier.

18. The optical transmission apparatus, according to claim 10, wherein at least either one of the said functional optical units in the respective first and the second optical circuit includes an optical node.

19. The optical transmission apparatus, according to claim 12, wherein said functional optical unit includes an optical amplifier.

20. The optical transmission apparatus, according to claim 12, wherein at least either one of said functional optical units in the respective first and the second optical circuit includes an optical node.

21. The optical transmission apparatus, according to claim 13, wherein said functional optical unit includes an optical amplifier.

22. The optical transmission apparatus, according to claim 13, wherein at least either one of said functional optical units in the respective first and the second optical circuit includes an optical node.

23. The optical transmission apparatus, according to claim 14, wherein said functional optical unit includes an optical amplifier.

24. The optical transmission apparatus, according to claim 14, wherein said functional optical unit includes an optical node.

25. An optical transmission apparatus, which processes a predetermined wavelength of light of optical signals input from a first input terminal and then outputs it from a first output terminal, and also outputs part of said optical signals from a second output terminal, comprising:
an optical demultiplexer, which demultiplexes said optical signals into a first and a second branch, wherein said first branch is connected to said second output terminal;
an optical filter, connected to said second branch; and
a functional optical unit, which processes an output light from said optical filter and then outputs it.

26. The optical transmission apparatus, according to claim 25, wherein said functional optical unit includes an optical amplifier.

27. The optical transmission apparatus, according to claim 25, wherein said functional optical unit includes an optical node.
